# EUROPÄISCHE PATENTSCHRIFT

(11) **EP 3 224 092 B1**
(45) Veröffentlichungstag und Bekanntmachung des Hinweises auf die Patenterteilung: **04.03.2020**
(21) Anmeldenummer: 15794940.5
(22) Anmeldetag: 17.11.2015
(51) Int. Cl.: B60S 1/38, B60S 1/34

(54) **FINRAY-WISCHER MIT AUSTAUSCHBAREM WISCHERGUMMI**
FIN RAY WIPER WITH REPLACEABLE WIPER BLADE ELEMENT
ESSUIE-GLACE FINRAY À CAOUTCHOUC INTERCHANGEABLE

(30) Priorität: 26.11.2014 DE 102014224087
(43) Veröffentlichungstag der Anmeldung: 04.10.2017
(73) Patentinhaber: Robert Bosch GmbH, 70442 Stuttgart (DE)
(72) Erfinder: KRUSE, Michael, 76547 Sinzheim (DE)
(86) Internationale Anmeldenummer: PCT/EP2015/076754
(87) Internationale Veröffentlichungsnummer: WO 2016/083187

(56) Entgegenhaltungen:
- EP-A2- 0 280 149
- EP-A2- 1 176 070
- EP-A2- 1 972 512
- DE-A1-102013 214 064
- FR-A1- 2 563 481
- FR-A1- 2 625 153
- GB-A- 2 146 239
- US-A- 3 958 295

## Beschreibung

Die Erfindung betrifft eine Scheibenwischvorrichtung für ein Fahrzeug, insbesondere ein Kraftfahrzeug.

### Stand der Technik

Scheibenwischvorrichtungen haben typischerweise einen Wischarm oder Wischhebel, wobei ein Wischblatt auf der Scheibe eines Kraftfahrzeugs bewegt wird. Dabei wird das Wischblatt zwischen einer ersten Wendelage und einer zweiten Wendelage bewegt. Zu diesem Zweck ist der Wischarm oder das Wischblatt über die Antriebswelle mit einem Wischermotor verbunden. Insbesondere auf Windschutzscheiben mit starken Krümmungsänderungen verliert das Wischblatt leicht den Kontakt zur Scheibe. Hierdurch kann es, insbesondere bei stark gekrümmten Scheiben zu ungewischten Wischbereichen bzw. zu Schleierbildung kommen.

Da ein Wischvorgang auf eine Vielzahl von Parametern optimiert werden muss, wie zum Beispiel eine Regenmenge auf der Scheibe, eine eventuell auftretende Schneelast auf der Scheibe, die Geschwindigkeit des Fahrzeugs und damit einhergehender Winddruck auf den Wischarm, kann eine Schleierbildung nicht auf einfache Weise durch Anpassung des Drucks des Wischarms auf die Windschutzscheibe zuverlässig verhindert werden. Daher ist es ein Bedürfnis, Scheibenwischvorrichtungen weiter zu verbessern.

Bei der Verbesserung gibt es eine Mehrzahl von Randbedingungen, die zusätzlich berücksichtigt werden sollten. Dabei ist es auch ein Bedürfnis, die Handhabung bzw. die Benutzerfreundlichkeit bei einer Wartung der Scheibenwischervorrichtung zu gewährleisten bzw. zu verbessern.

Eine Scheibenwischvorrichtung nach dem Fin-Ray Prinzip ist aus der DE 10 2013 214064 A1 bekannt. Weiterer Stand der Technik ist aus der FR 2 563 481 A1 und der EP 1972 512 A2 bekannt.

### Offenbarung der Erfindung

Es ist die Aufgabe der vorliegenden Erfindung, ein zuverlässiges, weitgehend schlierenfreies Wischen einer Scheibe eines Fahrzeugs zu gewährleisten, wobei ein einfaches und kostengünstiges Auswechseln eines Wischergummis bzw. einer Wischlippe bereitgestellt wird.

Diese Aufgabe wird gelöst durch eine Scheibenwischvorrichtung mit den Merkmalen gemäß Anspruch 1.

Gemäß einer Ausführungsform der vorliegenden Erfindung wird eine Scheibenwischvorrichtung für ein Fahrzeug, insbesondere ein Kraftfahrzeug, vorgeschlagen. Die Scheibenwischvorrichtung umfasst einen Wischarm mit einem Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet und an dem Oberteil und/oder dem Unterteil mittels eines Drehgelenks angebracht sind. Die Verbindungselemente sind ausgelegt, um eine Bewegung des Oberteils und des Unterteils relativ zueinander mit einer Bewegungskomponente entlang der Längserstreckung des Wischblatts zu ermöglichen.

Die Scheibenwischvorrichtung weist ferner einen Aufnahmeschlitz auf. Der Aufnahmeschlitz ist an dem Unterteil an einer der Scheibe zugewandten Seite entlang der Längserstreckung des Wischblatts ausgebildet, wobei der Aufnahmeschlitz dafür ausgelegt ist, einen Wischergummi bzw. einer Wischlippe auswechselbar aufzunehmen.

Bevorzugte Ausführungsformen und besondere Aspekte der Erfindung ergeben sich aus den abhängigen Ansprüchen, den Zeichnungen und der vorliegenden Beschreibung.

### Vorteile der Erfindung

Gemäß den hier beschriebenen Ausführungsformen der Erfindung können Scheibenwischvorrichtung für Fahrzeuge auf besonders günstige Weise und für eine Mehrzahl unterschiedlicher Einsatzgebiete hergestellt werden. Weiterhin ermöglichen es die Ausführungsformen der Erfindung, ein zuverlässiges, weitgehend schlierenfreies Wischen einer Scheibe eines Fahrzeugs, wobei ein Wischergummi an dem Wischarm der Scheibenwischvorrichtung einfach und kostengünstig angebracht und von diesem wieder entfernt werden kann. Insbesondere ist es vorteilhaft, wenn ein verbrauchter bzw. verschlissener Wischergummi auf einfache und kostengünstige Weise gegen einen neuen Wischergummi ausgewechselt werden kann.

Gemäß einer Ausführungsform der vorliegenden Erfindung wird eine Scheibenwischvorrichtung für ein Fahrzeug, insbesondere ein Kraftfahrzeug, vorgeschlagen. Die Scheibenwischvorrichtung umfasst einen Wischarm mit einem Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet und an dem Oberteil und/oder dem Unterteil mittels eines Drehgelenks angebracht sind. Die Verbindungselemente sind ausgelegt, um eine Bewegung des Oberteils und des Unterteils relativ zueinander mit einer Bewegungskomponente entlang einer Längserstreckung des Wischblatts zu ermöglichen. Die Scheibenwischvorrichtung weist ferner einen Aufnahmeschlitz auf. Der Aufnahmeschlitz ist an dem Unterteil an einer der Scheibe zugewandten Seite entlang der Längserstreckung des Wischblatts ausgebildet, wobei der Aufnahmeschlitz dafür ausgelegt ist, einen Wischergummi auswechselbar aufzunehmen.

Nach der Erfindung erstreckt sich der Aufnahmeschlitz für den Wischergummi entlang der Längserstreckung an einer Unterseite des Unterteils von einer Position des Wischblattkopfs zu einer dem Wischblattkopf entlang der Längserstreckung gegenüberliegenden Verbindungsposition von Oberteil und Unterteil. Auf diese Weise wird eine möglichst große Wischfläche für ein schlierenfreies Wischen der Scheibe des Kraftfahrzeugs erreicht.

Nach der Erfindung wird an der Verbindungsposition von Oberteil und Unterteil des Wischblatts ein Verschlussmechanismus bereitgestellt, welcher dafür ausgelegt ist, den Aufnahmeschlitz abzudecken. Damit wird in zweckmäßiger Weise der Wischergummi gegen ein Herausgleiten gesichert. Insbesondere kann, gemäß noch weiteren Ausführungsformen, der Verschlussmechanismus eine Kappe aufweisen, welche dafür ausgelegt ist, das an der Verbindungsposition gelegene Ende des Aufnahmeschlitzes abzudecken.

Gemäß noch weiteren Ausführungsformen kann die Kappe mittels eines Scharniers an dem Unterteil und/oder an dem Oberteil beweglich angebracht sein. Auf diese Weise ist die Kappe gegen einen Verlust gesichert und die Handhabung des Verschlussmechanismus wird erleichtert.

Gemäß noch weiteren Ausführungsformen kann das Scharnier aus der Gruppe gewählt werden, welche besteht aus einem Gelenk, einem Filmscharnier, einem Drehgelenk, einer Verjüngung des Materials zur Erzeugung geringerer Steifigkeit entlang einer Torsionsachse, einem Gelenk mit einer Rotationsachse, einem Mittel zur Verbindung des Oberteils mit der Kappe oder zur Verbindung des Unterteils mit der Kappe, das ein Einklappen der Kappe erlaubt, und jedweder Kombination davon.

Gemäß noch weiteren Ausführungsformen kann der Verschlussmechanismus ein Einrastteil aufweisen, welches dafür ausgelegt ist, in eine Aussparung an dem Unterteil einzurasten. Dadurch kann in zweckmäßiger Weise ein unbeabsichtigtes Öffnen des Aufnahmeschlitzes und damit evtl. ein Herausgleiten des Wischergummis aus dem Aufnahmeschlitz vermieden werden.

Gemäß noch weiteren Ausführungsformen kann der Aufnahmeschlitz zusammen mit dem Wischergummi derart ausgelegt werden, dass ein Kraft- und/oder ein Formschluss lösbar bereitgestellt wird. Auf diese Weise wird eine einfache Handhabung bei einer Montage bzw. Demontage des Wischergummis an der Unterseite des Unterteils ermöglicht. Ferner kann durch den Kraft- und/oder Formschluss eine Sicherung gegen ein unbeabsichtigtes Herausgleiten des Wischergummis aus dem Aufnahmeschlitz bereitgestellt werden.

Gemäß noch weiteren Ausführungsformen kann der Aufnahmeschlitz in einem Material ausgeführt werden, welches gewählt ist aus der Gruppe, die besteht aus Gummi, Carbon, POM, PA, TPE, insbesondere TPE-S, TPE-O, TPE-U, TPE-A TPE-V und TPE-E, oder jedweder Kombination davon. Auf diese Weise wird der Vorteil erzielt, dass durch eine geeignete Materialauswahl physikalische, und insbesondere mechanische Eigenschaften des Unterteils des Wischarms an einen anzubringenden Wischergummi angepasst werden können. Ferner ist es möglich, das Unterteil des Wischarms und/oder weitere Teile des Wischarms als integrale Bauteile in Spritzguss auszuführen, wodurch fertigungstechnische Vorteile erzielt werden, die eine kostengünstige Herstellung zulassen.

Nach der Erfindung ist das Unterteil und/oder das Oberteil einstückig mit dem Verschlussmechanismus ausgebildet. Auf diese Weise können weitere fertigungstechnische Vorteile erzielt werden, die eine kostengünstige Herstellung der Scheibenwischvorrichtung ermöglichen.

### Kurze Beschreibung der Zeichnungen

Ausführungsbeispiele der Erfindung sind in den Figuren dargestellt und werden im Folgenden näher beschrieben. Es zeigen:
Figur 1 eine perspektivische Darstellung eines Endes eines Wischarms mit aufgeklapptem Verschlussmechanismus, gemäß Ausführungsformen der Erfindung,
Figur 2 eine Seitenansicht des in Figur 1 dargestellten Wischarmendes zur Verdeutlichung der Funktionsweise des Verschlussmechanismus, gemäß Ausführungsformen der Erfindung,
Figur 3 eine Draufsicht auf das in Figur 1 dargestellte Wischarmende mit Scharnier in Richtung der Längserstreckung des Wischblatts, gemäß Ausführungsformen der Erfindung,
Figur 4 ein Ablaufdiagramm zur Verdeutlichung von Schritten, die bei einem Auswechseln eines Wischergummis vorgenommen werden, gemäß Ausführungsformen der Erfindung,
Figur 5A eine schematische Darstellung eines weiteren Ausführungsbeispiels einer erfindungsgemäßen Scheibenwischvorrichtung in Form eines Wischarms mit integriertem Wischblatt in einer Grundstellung,
Figur 5B eine schematische Darstellung des Wischarms mit integriertem Wischblatt nach Figur 5A in einer an eine Scheibe angelegten Stellung,
Figur 6 eine schematische Darstellung eines Wischblatts gemäß Ausführungsformen vorliegenden Erfindung in einer Grundstellung, und
Figur 7 eine schematische Darstellung eines Wischblatts gemäß Ausführungsformen der vorliegenden Erfindung in einer an eine Scheibe angelegten Stellung.

### Ausführungsformen der Erfindung

Im Folgenden werden, sofern nicht anders vermerkt, für gleiche und gleichwirkende Elemente gleiche Bezugszeichen verwendet.

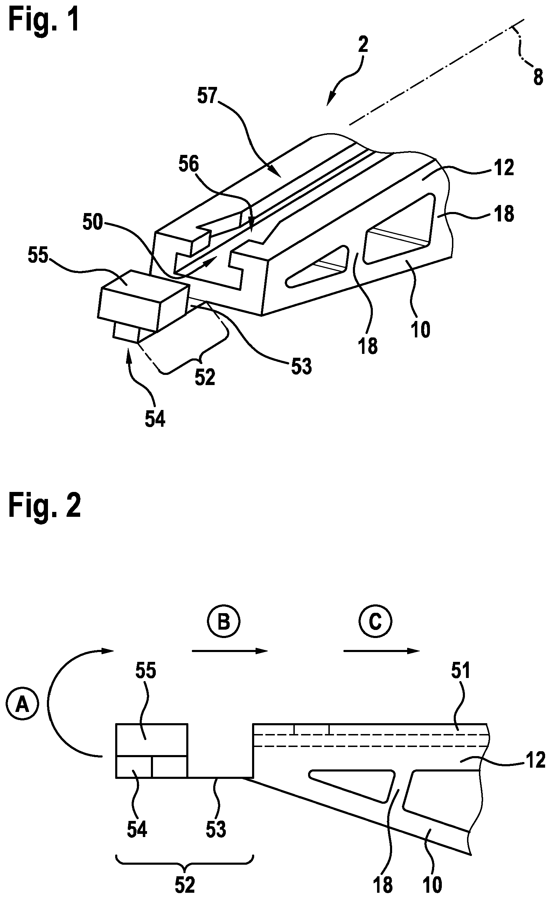

Figur 1 zeigt eine perspektivische Darstellung eines Endes eines Wischblatts 2 mit aufgeklapptem Verschlussmechanismus 52 einer Scheibenwischvorrichtung für ein Fahrzeug, gemäß Ausführungsformen der Erfindung. Derartige Scheibenwischvorrichtungen weisen typischerweise einen Wischergummi auf, der einem Verschleiß unterworfen sein kann. Daher ist es vorteilhaft, wenn ein verbrauchter bzw. verschlissener Wischergummi auf einfache und kostengünstige Weise gegen einen neuen Wischergummi ausgewechselt werden kann.

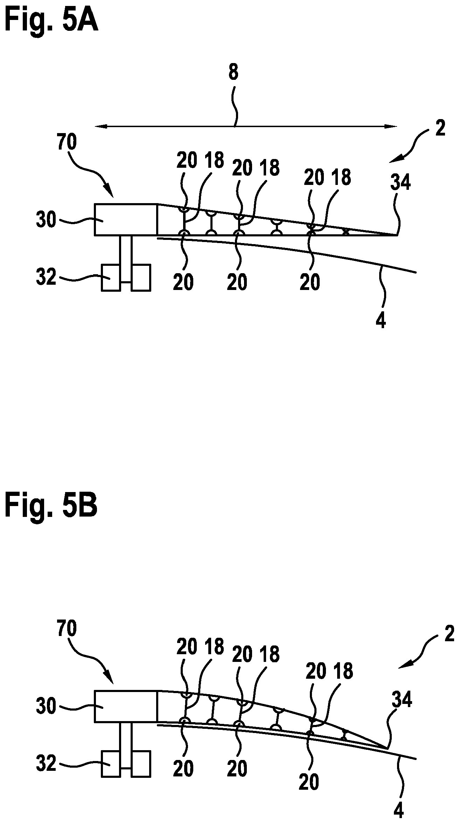

Wie in Figur 1 dargestellt, weist das Wischblatt 2 ein langgestrecktes Oberteil 10 und ein langgestrecktes Unterteil 12 auf, welche zumindest teilweise biegbar ausgestaltet sind, wobei das Unterteil 12 bei einem Betrieb der Scheibenwischvorrichtung einer Scheibe 4 (in Figur 1 nicht dargestellt, siehe Figuren 5A bis 7) zugewandt ist. Ferner sind mehrere Verbindungselemente 18 zum Verbinden des Oberteils 10 und des Unterteils 12 vorgesehen, wobei die Verbindungselemente 18 entlang einer Längserstreckung 8 des Wischblatts voneinander beabstandet und an dem Oberteil 10 und/oder dem Unterteil 12 mittels eines Drehgelenks 20 (siehe z.B. Figur 5A) angebracht sind. Die Verbindungselemente 18 sind ausgelegt, um eine Bewegung des Oberteils 10 und des Unterteils 12 relativ zueinander mit einer Bewegungskomponente entlang der Längserstreckung 8 des Wischblatts 2 zu ermöglichen. Hierbei sind die Verbindungselemente an dem Oberteil 10 an einer jeweiligen oberen Verbindungsposition verbunden und an dem Unterteil 12 an einer jeweiligen unteren Verbindungsposition. Zum Beispiel ist an den Verbindungspositionen jeweils ein Drehgelenk 20 zur Verfügung gestellt. Bei einer Bewegung des Oberteils 10 des Unterteil 12 relativ zueinander verändert sich der Abstand einer oberen Verbindungsposition zu einer unteren Verbindungsposition am selben Verbindungselement im Wesentlichen nicht, d.h. der Abstand ist mit Abweichungen von zum Beispiel ±1 mm, insbesondere ±0,3 mm konstant.

Entlang der Längserstreckung 8 des Wischblatts 2 wird der Abstand zwischen dem Oberteil 10 und dem Unterteil 12 ausgehend vom Wischblattkopf 70 kleiner, zumindest in Bereichen der Längserstreckung des Wischblatts 2 bzw. in einem überwiegenden Teil der Längserstreckung 8 des Wischblatts 2, siehe Figuren 5A, 5B, 6 und 7. Ausgehend vom Kopfende läuft die Höhe des Wischblatts 2 in Bereichen keilförmig zu bzw. wird in Bereichen der Längserstreckung 8 kleiner. Zum Beispiel kann gemäß Ausführungsformen für eine Mehrzahl der Verbindungselemente 18 die Länge der Verbindungselemente 18 derart zur Verfügung gestellt werden, dass die in der Nähe des Wischblattkopfs 70 zur Verfügung gestellten Verbindungselemente 18 länger sind als die an der gegenüberliegenden Seite des Wischblatts 2 entlang der Längserstreckung 8, d.h. in der Nähe einer Verbindungsposition 34.

Durch diese Eigenschaften kann ein Wischblatt 2 zur Verfügung gestellt werden, das nach dem Finray-Prinzip funktioniert.

An einer der Scheibe 4 zugewandten Seite 57 des Unterteils 12 weist das Unterteil 12 einen Aufnahmeschlitz 50 entlang der Längserstreckung 8 des Wischblatts 2 auf. Der Aufnahmeschlitz 50 ist dafür ausgelegt, einen Wischergummi 51 bzw. eine Wischlippe auswechselbar aufzunehmen. Der Aufnahmeschlitz 50 für den Wischergummi kann sich entlang der Längserstreckung 8 des Wischblatts 2 an einer Unterseite des Unterteils 12 von einer Position des Wischblattkopfs 70 (in Figur 1 nicht gezeigt, siehe Figuren 5A bis 7) zu der dem Wischblattkopf 70 entlang der Längserstreckung 8 gegenüberliegenden Verbindungsposition 34 von Oberteil 10 und Unterteil 12 erstrecken. Auf diese Weise wird eine möglichst große Wischfläche für ein schlierenfreies Wischen der Scheibe 4 des Kraftfahrzeugs erreicht.

Gemäß noch weiteren Ausführungsformen, welche mit hierin beschriebenen Ausführungsformen kombiniert werden können, kann an der Verbindungsposition 34 von Oberteil 10 und Unterteil 12 des Wischblatts 2 ein Verschlussmechanismus 52 bereitgestellt sein, welcher dafür ausgelegt ist, den Aufnahmeschlitz 50 abzudecken. Damit wird in zweckmäßiger Weise ein einmal in den Aufnahmeschlitz 50 eingeführter Wischergummi gegen ein Herausgleiten gesichert.

Gemäß noch weiteren Ausführungsformen kann der Verschlussmechanismus 50 eine Kappe 54 aufweisen, welche dafür ausgelegt ist, das an der Verbindungsposition 34 gelegene Ende des Aufnahmeschlitzes 50 abzudecken.

Gemäß noch weiteren Ausführungsformen kann die Kappe 54 mittels eines Scharniers 53 an dem Unterteil 12 und/oder an dem Oberteil 10 beweglich angebracht sein. Auf diese Weise ist die Kappe 54 gegen einen Verlust gesichert und die Handhabung des Verschlussmechanismus 52 wird erleichtert. Bei der in Figur 1 gezeigten Ausführungsform ist die Kappe 54 mittels eines Filmscharniers 53 an dem Oberteil 10 des Wischarms 2 beweglich angebracht.

Gemäß noch weiteren Ausführungsformen kann das Scharnier 53 aus der Gruppe gewählt werden, welche besteht aus einem Gelenk, einem Filmscharnier, einem Drehgelenk, einer Verjüngung des Materials zur Erzeugung geringerer Steifigkeit entlang einer Torsionsachse, einem Gelenk mit einer Rotationsachse, einem Mittel zur Verbindung des Oberteils 10 mit der Kappe 54 oder zur Verbindung des Unterteils 12 mit der Kappe 54, das ein Einklappen der Kappe 54 erlaubt, und jedweder Kombination davon.

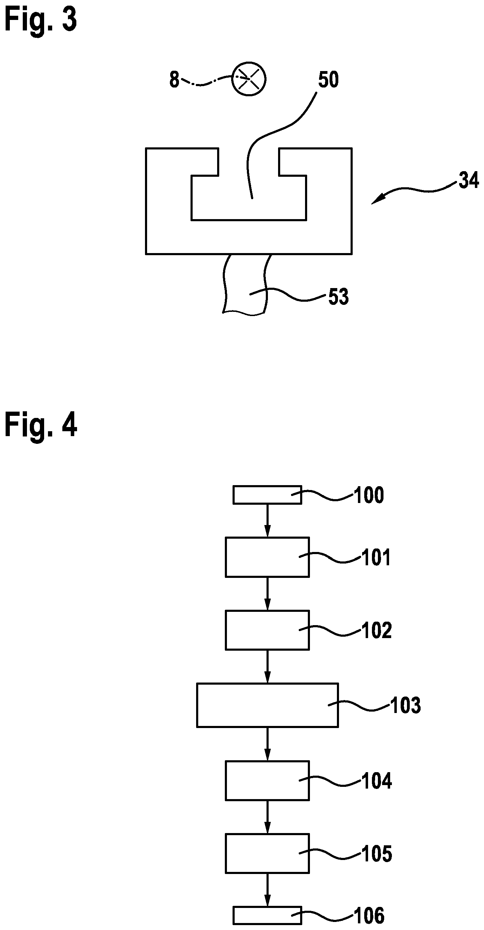

Die Figuren 2 und 3 zeigen weitere Details des Verschlussmechanismus 52 und des Aufnahmeschlitzes 50 an oder in der Nähe der Verbindungsposition 34.

Figur 2 ist eine Seitenansicht des in Figur 1 dargestellten Wischarmendes zur Verdeutlichung der Funktionsweise des Verschlussmechanismus, gemäß Ausführungsformen der Erfindung. Figur 3 ist eine Draufsicht auf das in Figur 1 dargestellte Wischarmende 34 mit Scharnier 53 in Richtung der Längserstreckung 8 des Wischblatts 2, gemäß Ausführungsformen der Erfindung.

Der Verschlussmechanismus 52 ist in einer geöffneten Stellung gezeigt, welche in Figur 2 mit einem Bezugszeichen A gekennzeichnet ist. In dieser Stellung kann ein Wischergummi 51 in den Aufnahmeschlitz 50 eingeführt bzw. aus diesem entnommen werden. Anschließend kann die Kappe 54 des Verschlussmechanismus 52, welche an einem Filmscharnier 53 beweglich angebracht ist, um einen Winkel von ungefähr 180° nach oben geklappt werden (Position B).

Die Kappe 54 weist ein Einrastteil 55 auf, welches dafür ausgelegt ist, in eine in Figur 1 dargestellte Aussparung 56 an dem Unterteil 12 des Wischblatts 2 einzugreifen bzw. einzurasten. Wenn die Kappe 54 in die Aussparung 56 an der Unterseite des Unterteils 12 eingerastet ist, kann der Verschlussmechanismus 52 eine geschlossene Stellung einnehmen (Position C) und eine Sicherung des Wischergummis 51 bzw. der Wischlippe gegen ein Herausgleiten derselben aus dem Aufnahmeschlitz 50 kann bereitgestellt werden.

Gemäß noch weiteren Ausführungsformen, welche mit anderen hierin beschriebenen Ausführungsformen kombiniert werden können, kann der Aufnahmeschlitz 50 zusammen mit dem Wischergummi 51 derart ausgelegt werden, dass ein Kraft- und/oder ein Formschluss zwischen dem Aufnahmeschlitz 50 und dem Wischergummi 51 lösbar bereitgestellt wird. Auf diese Weise wird eine einfache Handhabung bei einer Montage bzw. Demontage des Wischergummis 51 an der Unterseite 57 des Unterteils 12 in dem Aufnahmeschlitz 50 ermöglicht. Ferner kann durch den Kraft- und/oder Formschluss eine Sicherung gegen ein unbeabsichtigtes Herausgleiten des Wischergummis 51 aus dem Aufnahmeschlitz 50 bereitgestellt werden.

Gemäß noch weiteren Ausführungsformen, welche mit hierin beschriebenen Ausführungsformen kombiniert werden können, ist das Material, in welchem der Aufnahmeschlitz 50 gebildet ist, d.h. beispielsweise das Material des Unterteils 12 aus der Gruppe gewählt, die besteht aus Gummi, Carbon, POM, PA, TPE, insbesondere TPE-S, TPE-O, TPE-U, TPE-A TPE-V und TPE-E, und jedweder Kombination davon. Auf diese Weise wird der Vorteil erzielt, dass durch eine geeignete Materialauswahl physikalische, und insbesondere mechanische Eigenschaften des Unterteils 12 des Wischarms 2 an einen anzubringenden Wischergummi 51 angepasst werden können. Ferner ist es möglich, das Unterteil 12 des Wischarms 2 und/oder weitere Teile des Wischarms 2 wie etwas das Oberteil 10 und die Verbindungselemente 18 als integrale Bauteile in Spritzguss auszuführen, wodurch fertigungstechnische Vorteile erzielt werden, die eine kostengünstige Herstellung der Scheibenwischvorrichtung zulassen.

Gemäß noch weiteren Ausführungsformen können das Unterteil 12 und/oder das Oberteil 10 einstückig mit dem Verschlussmechanismus 52 ausgebildet sein. Auf diese Weise können weitere fertigungstechnische Vorteile erzielt werden, die eine einfache und kostengünstige Herstellung der Scheibenwischvorrichtung ermöglichen.

Figur 4 zeigt ein Ablaufdiagramm zur Verdeutlichung von Schritten, die einem Auswechseln des Wischergummis 51 typischerweise vorgenommen werden, gemäß Ausführungsformen der Erfindung. Die Prozedur startet in einem Block 100. Anschließend wird die Kappe 54 des Verschlussmechanismus 52 aufgeklappt (Block 101 und Position A in Figur 2). Ein verbrauchter Wischergummi 51 kann nun aus dem Aufnahmeschlitz 50 an dem Unterteil 12 des Wischblatts 2 herausgezogen werden, Block 102.

In einem Block 103 wird ein neuer Wischergummi 51 in den Aufnahmeschlitz 50 eingeführt. Schließlich wird die die Kappe 54 des Verschlussmechanismus 52, welche an dem Filmscharnier 53 beweglich angebracht ist, um einen Winkel von ungefähr 180° nach oben geklappt (Block 104). In einem anschließenden Schritt kann die Kappe 54 in die in Figur 1 dargestellte Aussparung 56 an der Unterseite des Unterteils 12 einrasten, wodurch der Verschlussmechanismus 52 eine geschlossene Stellung einnimmt (Block 105). Auf diese Weise wird eine Sicherung des Wischergummis 51 bzw. der Wischlippe gegen ein Herausgleiten aus dem Aufnahmeschlitz 50 bereitgestellt. Die Prozedur endet in einem Block 106.

Im Folgenden werden Aspekte einer beispielhaften Scheibenwischvorrichtung beschrieben, für welche die hierin beschriebenen Ausführungsformen der Scheibenwischvorrichtung, insbesondere die Aufnahme des Wischergummis 51 in dem Aufnahmeschlitz 50 des Unterteils 12 vorteilhaft sind.

Figuren 5A und 5B zeigen schematische Darstellungen eines Wischblatts 2 in einer Grundstellung und in einer an eine Scheibe angelegten Stellung gemäß Ausführungsformen der Scheibenwischvorrichtung der Offenbarung. Es werden hier Fin-Ray-Wischer beschrieben, für die ein Aufnahmeschlitz 50 für Wischergummis 51 gemäß der hier beschriebenen Ausführungsformen besonders nützlich ist. Der Aufnahmeschlitz 50 zusammen mit dem Verschlussmechanismus 52 ist in den Figuren 5A, 5B, 6 und 7 nicht erneut dargestellt und kann auch in diesen Ausführungsformen wie zuvor beschrieben zur Verfügung gestellt werden. Das Wischblatt 2 dient zum Wischen der Scheibe 4 eines Fahrzeugs, das zum Beispiel ein Kraftfahrzeug ist, insbesondere ein Auto. Das Wischblatt 2 hat eine Längserstreckung 8 und weist ein langgestrecktes Oberteil 10 und ein ebenfalls langgestrecktes Unterteil 12 auf. Die Längserstreckungen des Oberteils 10 und des Unterteils 12 entsprechen im Wesentlichen der Längserstreckung 8 des Wischblatts 2.

Sowohl das Oberteil 10 als auch das Unterteil 12 sind biegbare Balken oder können als biegbare Balken ausgestaltet sein. Es ist ebenso möglich, nur jeweils einen Teil des Oberteils 10 und/oder des Unterteils 12 biegbar auszugestalten. Gemäß manchen Ausführungsformen, die mit den anderen hier beschriebenen Ausführungsformen kombiniert werden können, wird für das Oberteil 10 und/oder das Unterteil 12 ein Material eingesetzt, das einen Elastizitätsmodul hat, der in einem Bereich zwischen 0,005 kN/mm² und 0,5 kN/mm², insbesondere 0,01 kN/mm² und 0,1 kN/mm², liegt. Dies ermöglicht eine geeignete Biegefähigkeit des Oberteils 10 und des Unterteils 12. Zusammen mit einer geeignet ausgestalteten Querschnittsfläche des Oberteils 10 und des Unterteils 12 ergibt sich so eine optimale Biegesteifigkeit.

Das Oberteil 10 und das Unterteil 12 sind an einem wischblattseitigen Befestigungsteil 30 befestigt. Die Scheibenwischvorrichtung kann mittels des wischblattseitigen Befestigungsteils 30, zum Beispiel mit einer Quickfix-Befestigung, am Fahrzeug bzw. mit der Antriebsachse einer Scheibenwischer-Antriebseinheit (Wischermotor) des Fahrzeugs verbunden werden. Eine derartige Quickfix-Befestigung kann eine Antriebswelle der Scheibenwischvorrichtung mit dem Wischarm 1 schnell lösbar verbinden.

An der Seite, die dem Befestigungsteil 30 entlang der Längserstreckung 8 der Scheibenwischvorrichtung gegenüberliegt, ist das Oberteil 10 und das Unterteil 12 an einer Verbindungsposition 34 verbunden. Das Oberteil 10 und das Unterteil 12 sind durch Verbindungselemente 18 miteinander verbunden. Die Verbindungselemente 18 sind derart ausgestaltet, dass sich der Abstand der Verbindungsposition mit dem Oberteil 10 und der Abstand der Verbindungsposition mit dem Unterteil 12 um maximal +/- 1 mm ändert, insbesondere um maximal +/- 0,3 mm ändert (zum Beispiel durch Wärmeausdehnung und/oder Zug und Druckbelastung). Die Verbindungselemente 18 können somit im Wesentlichen nicht elastisch ausgebildet bzw. der Effekt der Verbindungselemente 18 beruht auf deren Kraftübertragung zwischen Oberteil 10 und Unterteil 12 und nicht auf deren Elastizität.

Die Verbindungselemente 18 sind an einander zugewandten inneren Längsseiten des Oberteils 10 und des Unterteils 12 mittels Drehgelenken 20 befestigt. Typischerweise sind die Drehgelenke 20 Scharniere. Insbesondere können die Drehgelenke 20 als Filmscharniere ausgebildet sein. Dies ist vor allem dann vorteilhaft, wenn das Oberteil 10, das Unterteil 12 und/oder die Verbindungselemente 18 aus einem Kunststoffmaterial hergestellt oder mit einem geeigneten Kunststoffmaterial überzogen sind.

Gemäß typischen hier beschriebenen Ausführungsformen, die mit anderen hier beschriebenen Ausführungsformen kombiniert werden können, ist ein Drehgelenk 20 aus der folgenden Gruppe ausgewählt, die besteht aus: einem Scharnier, einem Filmscharnier, einer Verjüngung des Materials zur Erzeugung geringerer Steifigkeit entlang einer Torsionsachse, einem Gelenk mit einer Rotationsachse, einem Mittel zur Verbindung des Oberteils mit dem Verbindungselement oder zur Verbindung des Unterteils mit dem Verbindungselement, das die Verschiebung des Unterteils in Bezug auf das Oberteil entlang der Längserstreckung erlaubt, etc.

Ausführungsformen, bei denen die Gelenke durch Filmscharniere zur Verfügung gestellt sind, stellen somit eine sehr einfache Art und Weise zur Verfügung, um die Gelenke für einen Fin-Ray-Wischer zur Verfügung zu stellen. Das Wischblatt 2 kann einteilige, insbesondere werkzeugfallend, zur Verfügung gestellt werden. Gemäß typischen Ausführungsformen haben die Filmscharniere eine hohe Dehnbarkeit. Dies kann zum Beispiel durch ein Material ausgewählt aus der Gruppe PP, PE, POM, und PA, zur Verfügung gestellt werden. Alternativ können die Filmscharniere aus einem oder mehreren Materialen aus einer Gruppe bestehend aus: TPE (Thermoplastischem Elastomer), beispielsweise TPE-S, TPE-O, TPE-U, TPE-A TPE-V und TPE-E hergestellt sein.

Die Verbindungselemente 18 sind entlang der Längserstreckung 8 des Wischblatts 2 voneinander beabstandet. Die Abstände sind vorteilhafterweise kleiner als 50 mm, insbesondere kleiner als 30 mm. Dadurch kann eine besonders hohe Flexibilität der Scheibenwischvorrichtung, insbesondere ihres Unterteils 12, und gute Anpassung an die Krümmung und Krümmungsänderungen der zu wischenden Scheibe 4 gewährleistet werden.

Figur 5B zeigt eine schematische Darstellung des Wischblatts 2 nach Figur 5A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 12 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an.

Durch den Aufbau der hier beschriebenen Ausführungsformen, findet bei einer Krafteinwirkung auf das Unterteil 12 (durch die Scheibe 4) eine Biegung des Unterteils 12 in die Richtung statt, aus der die Kraft wirkt. Dies ist durch die Verbindung des Oberteils 10 und des Unterteils 12 an der Verbindungsposition 34, die Form, und durch Drehgelenke 20 an der Verbindung zwischen den Verbindungselementen 18 und dem Ober- bzw. Unterteil gegeben. Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Fin Ray"-Prinzip bezeichnet. Dadurch hat eine Scheibenwischvorrichtung gemäß den hierin beschriebenen Ausführungsformen den Vorteil einer verbesserten Anpassung an eine Scheibe 4 eines Kraftfahrzeugs. Bei einem herkömmlichen Scheibenwischblatt ist dessen Oberteil üblicherweise starr, d. h. es ist nicht biegbar ausgebildet.

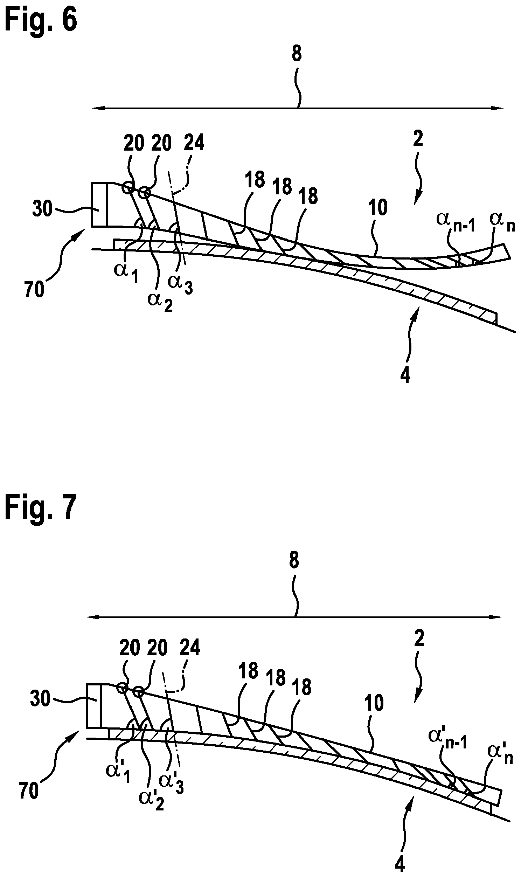

Figuren 6 und 7 zeigen schematische Darstellungen eines Wischblatts 2 einer Scheibenwischvorrichtung für ein Fahrzeug, insbesondere für ein Kraftfahrzeug, in einer Grundstellung (Figur 6), d.h. in einem unbelastetem Zustand, und in einer an eine Scheibe 4 angelegten Stellung (Figur 7) gemäß den hierein beschrieben Ausführungsformen. Das Wischblatt 2 umfasst ein langgestrecktes Oberteil 10 und ein langgestrecktes Unterteil 12, welche zumindest teilweise biegbar ausgestaltet sind. Des Weiteren sind mehrere Verbindungselemente 18 zum Verbinden des Oberteils 10 und des Unterteils 12 vorgesehen, wobei die Verbindungselemente 18 entlang der Längserstreckung 8 des Wischblatts 2 voneinander beabstandet sind. Die Verbindungselemente 18 sind ausgelegt, um eine Bewegung des Oberteils 10 und des Unterteils 12 relativ zu einander mit einer Bewegungskomponente entlang der Längserstreckung 8 des Wischblatts 2 zu ermöglichen. Des Weiteren sind die Verbindungselemente 18 relativ zum Unterteil 12 so angeordnet, dass sich in einem unbelasteten Zustand des Wischblatts 2 ein Winkel αₙ der jeweiligen Längsachsen 24 der Verbindungselemente 18 relativ zum Unterteil 12 zumindest teilweise entlang der Längserstreckung 8 des Wischblatts 2 verändert, insbesondere stetig verändert bzw. monoton oder streng monoton verändert.

In dem in Figur 6 dargestellten Wischblatt 2 im unbelastetem Zustand sind die Winkel αₙ der jeweiligen Längsachsen 24 der Verbindungselemente 18 relativ zum Unterteil 12, die sich entlang der Längserstreckung 8 des Wischblatts 2 ändern, mit α₁, α₂, α₃, ... αₙ₋₁, αₙ bezeichnet. In einem belasteten Zustand des Wischblatts 2, d.h. in einer an die Scheibe 4 angelegten Stellung, wie sie beispielhaft in Figur 7 dargestellt ist, verändern sich die Winkel αₙ der jeweiligen Längsachsen 24 der Verbindungselemente 18 relativ zum Unterteil 12 im Vergleich zum unbelasteten Zustand. Um dies zum Ausdruck zu bringen, sind die Winkel αₙ der jeweiligen Längsachsen 24 der Verbindungselemente 18 relativ zum Unterteil 12, die sich entlang der Längserstreckung 8 des Wischblatts 2 ändern, in dem in Figur 7 dargestellten Wischblatt, welches sich in einer an die Scheibe angelegten Position befindet, mit α'₁, α'₂, α'₃, ... α'ₙ₋₁, α'ₙ bezeichnet.

Gemäß Ausführungsformen der Scheibenwischvorrichtung, welche mit anderen Ausführungsformen kombiniert werden können, weist das Wischblatt 2 zumindest einen ersten Bereich auf, in dem der Winkel αₙ der Längsachsen 24 der Verbindungselemente 18 relativ zum Unterteil 12 entlang der Längserstreckung 8 des Wischblatts 2 zu einem Wischblattende hin abnimmt, insbesondere monoton, insbesondere streng monoton, abnimmt. Ferner kann das Wischblatt 2 zumindest einen zweiten Bereich aufweisen, in dem der Winkel αₙ der Längsachsen 24 der Verbindungselemente 18 relativ zum Unterteil 12 entlang der Längserstreckung 8 des Wischblatts 2 zu einem Wischblattende hin zunimmt, insbesondere monoton, insbesondere streng monoton, zunimmt. Gemäß Ausführungsformen, wie beispielhaft in den Figuren 6 und 7 dargestellt, ist der zweite Bereich des Wischblatts, in dem der Winkel αₙ der Längsachsen 24 der Verbindungselemente 18 relativ zum Unterteil 12 entlang der Längserstreckung 8 des Wischblatts 2 zu einem Wischblattende hin zunimmt, an einer inneren Position des Wischblatts angeordnet, welche sich in der Nähe des Befestigungsteils 30 des Wischblatts 2 befindet. Dadurch kann eine Scheibenwischvorrichtung zur Verfügung gestellt werden, welche eine besonders gute Anpassung an die Krümmung einer Scheibe 4 ermöglicht. Ferner kann ein weitgehend gleichmäßiger Anpressdruck der Scheibenwischvorrichtung auf der Scheibe 4 als auch eine homogene Kraftverteilung der Scheibenwischvorrichtung bereitgestellt werden, so dass eine hohe Wischqualität bereitgestellt wird.

Gemäß Ausführungsformen des Wischblatts 2, welche mit anderen Ausführungsformen kombiniert werden können, sind die Verbindungselemente 18, insbesondere in einem unbelastetem Zustand des Wischblatts 2, so an dem Unterteil 12 befestigt, dass die Längsachsen 24 der Verbindungselemente 18 in Winkeln αₙ zum Unterteil 12 verlaufen, die zwischen einem unteren Winkelgrenzwert αₙᵤ und einem oberen Grenzwert αₙₒ liegen. Gemäß Ausführungsformen ist der untere Winkelgrenzwert αₙᵤ = 10°, insbesondere αₙᵤ = 15°, insbesondere αₙᵤ = 20° und der obere Winkelgrenzwert αₙₒ = 80°, insbesondere αₙₒ = 90°, insbesondere αₙₒ = 100°. Dies gewährleistet vorteilhafterweise eine besonders gute Übertragung einer auf das Unterteil 12 wirkenden Kraft auf das Oberteil 10.

Gemäß Ausführungsformen der Scheibenwischvorrichtung, welche mit anderen Ausführungsformen kombiniert werden können, sind die Verbindungselemente 18 derart konfiguriert sind, dass sich der Abstand zwischen dem Oberteil 10 und dem Unterteil 12 zumindest teilweise entlang der Längserstreckung 8 des Wischblatts 2 verändert, insbesondere in einem ersten Bereich stetig verkleinert und in einem zweiten Bereich stetig vergrößert. Der Abstand zwischen dem Oberteil 10 und dem Unterteil 12 entlang der Längserstreckung 8 des Wischblatts 2 kann auch einen Bereich umfassen, in welchem der Abstand zwischen dem Oberteil 10 und dem Unterteil 12 entlang der Längserstreckung 8 des Wischblatts 2 im Wesentlichen konstant ist. Der Abstand zwischen dem Oberteil 10 und dem Unterteil 12 ist am Befestigungsteil 30 größer als am gegenüberliegenden Ende, an welchem sich die Verbindungsposition 34 befindet.

Gemäß Ausführungsformen des Wischblatts 2, welche mit anderen Ausführungsformen kombiniert werden können, beträgt der innere (dem Befestigungsteil zugewandte) Abstandswert mindestens 15 mm, insbesondere mindestens 25 mm, insbesondere mindestens 35 mm. Gemäß Ausführungsformen, welche mit anderen Ausführungsformen kombiniert werden können, beträgt der äußere Abstandswert mindestens 10 mm, insbesondere mindestens 12,5 mm, insbesondere mindestens 15 mm. Gemäß Ausführungsformen, welche mit anderen Ausführungsformen kombiniert werden können, beträgt der mittlere Abstandswert mindestens 7,5 mm, insbesondere mindestens 9 mm, insbesondere mindestens 12,5 mm.

Wie in den Figuren 6 bis 7 beispielhaft dargestellt, sind die Verbindungselemente 18 gemäß Ausführungsformen, welche mit anderen Ausführungsformen kombiniert werden können, gelenkig mit dem Unterteil 12 und/oder dem Oberteil 10 verbunden. Insbesondere sind die Verbindungselemente 18 mit dem Unterteil 12 und/oder dem Oberteil 10 mittels eines ersten Filmscharniers 20 verbunden. Das erste Filmscharnier 20 kann einteilig mit dem Verbindungselement 18 und dem Oberteil 10 und/oder dem Unterteil 12 ausgebildet sein. Die einteilige Ausgestaltung der Filmscharniere erlaubt eine einfache und kostengünstige Herstellung.

Gemäß Ausführungsformen des Wischblatts, welche mit anderen hierin beschriebenen Ausführungsformen kombiniert werden können, umfasst das Wischblatt einen ersten Bereich mit einer ersten Krümmung ω<0 und einen zweiten Bereich mit einer zweiten Krümmung ω>0. Ferner kann das Wischblatt gemäß Ausführungsformen einen dritten Bereich mit einer dritten Krümmung ω<0 aufweisen, wobei der zweite Bereich des Wischblatts mit der zweiten Krümmung ω>0 zwischen dem ersten Bereich mit der ersten Krümmung ω<0 und dem dritten Bereich mit der dritten Krümmung ω<0 angeordnet ist, wie es beispielhaft in Figur 6 gezeigt ist. Somit kann eine Scheibenwischvorrichtung zur Verfügung gestellt werden mit welcher ein weitgehend gleichmäßiger Anpressdruck auf die Scheibe 4 realisiert werden kann. Ferner kann eine Scheibenwischvorrichtung bereitgestellt werden, welche eine verbesserte Anpassung an die Scheibe 4 und eine hohe Wischqualität aufweist.

Gemäß weiteren Ausführungsformen kann zusätzlich zu einem für Fin-Ray-Wischer verwendbaren Quickfix-Befestigungsverschluss, bei dem die gesamte Scheibenwischvorrichtung von der Antriebswelle am Fahrzeug entfernt wird, ein Mechanismus zur Verfügung gestellt werden, um das Wischblatt 2 einer Scheibenwischvorrichtung von der Scheibe 4 abzuheben bzw. auf diese aufzusetzen. Dies vereinfacht weiter die Benutzung, zum Beispiel für eine manuelle Reinigung der Scheibe 4.

## Patentansprüche

1. Scheibenwischvorrichtung, geeignet zum Wischen einer Scheibe (4) eines Fahrzeugs, insbesondere eines Kraftfahrzeugs, umfassend einen Wischarm (1) mit einem Wischblattkopf (70) und einem Wischblatt (2) nach dem Finray-Prinzip, welches umfasst:
- ein langgestrecktes Oberteil (10), das zumindest teilweise biegbar ausgestaltet ist,
- ein langgestrecktes Unterteil (12), das zumindest teilweise biegbar ausgestaltet ist, und
- mehrere Verbindungselemente (18) zum Verbinden des Oberteils (10) und des Unterteils (12), wobei die Verbindungselemente (18) entlang einer Längserstreckung (8) des Wischblatts (2) voneinander beabstandet und an dem Oberteil (10) und/oder dem Unterteil (12) mittels eines Drehgelenks (20) angebracht sind, insbesondere wobei die Verbindungselemente (18) ausgelegt sind, um eine Bewegung des Oberteils (10) und des Unterteils (12) relativ zueinander mit einer Bewegungskomponente entlang der Längserstreckung (8) des Wischblatts (2) zu ermöglichen,
wobei das Unterteil (12) an einer der Scheibe (4) zugewandten Seite (57) einen Aufnahmeschlitz (50) entlang der Längserstreckung (8) des Wischblatts (2) aufweist,
wobei der Aufnahmeschlitz (50) dafür ausgelegt ist, einen Wischergummi (51) auswechselbar aufzunehmen und wobei sich der Aufnahmeschlitz (50) entlang der Längserstreckung (8) an einer Unterseite des Unterteils (12) von einer Position des Wischblattkopfs (70) zu einer dem Wischblattkopf (70) entlang der Längserstreckung (8) gegenüberliegenden Verbindungsposition (34) von Oberteil (10) und Unterteil (12) erstreckt, **dadurch gekennzeichnet, dass** an der Verbindungsposition (34) ein Verschlussmechanismus (52) bereitgestellt ist, welcher dafür ausgelegt ist, den Wischergummi (51) gegen ein Herausgleiten zu sichern, wobei das Unterteil (12) und/oder das Oberteil (10) einstückig mit dem Verschlussmechanismus (52) ausgebildet ist.

2. Scheibenwischvorrichtung nach Anspruch 1, wobei der Verschlussmechanismus (52) eine Kappe (54) umfasst, welche dafür ausgelegt ist, das an der Verbindungsposition (34) gelegene Ende des Aufnahmeschlitzes (50) abzudecken.

3. Scheibenwischvorrichtung nach Anspruch 2, wobei die Kappe (54) mittels eines Scharniers (53) an dem Unterteil (12) und/oder an dem Oberteil (10) beweglich angebracht ist.

4. Scheibenwischvorrichtung nach Anspruch 3, wobei das Scharnier (53) aus der Gruppe gewählt ist, welche besteht aus einem Gelenk, einem Filmscharnier, einem Drehgelenk, einer Verjüngung des Materials zur Erzeugung geringerer Steifigkeit entlang einer Torsionsachse, einem Gelenk mit einer Rotationsachse, einem Mittel zur Verbindung des Oberteils (10) mit der Kappe (54) oder zur Verbindung des Unterteils (12) mit der Kappe (54), das ein Einklappen der Kappe (54) erlaubt, und jedweder Kombination davon.

5. Scheibenwischvorrichtung nach einem der Ansprüche 1 bis 4, wobei der Verschlussmechanismus (52) ein Einrastteil (55) aufweist, welches dafür ausgelegt ist, in eine Aussparung (56) an dem Unterteil (12) einzurasten.

6. Scheibenwischvorrichtung nach einem der Ansprüche 1 bis 5, wobei der Aufnahmeschlitz (50) zusammen mit dem Wischergummi (53) derart ausgelegt ist, dass ein Kraft- und/oder ein Formschluss lösbar bereitgestellt wird.

7. Scheibenwischvorrichtung nach einem der Ansprüche 1 bis 6, wobei der Aufnahmeschlitz (50) in einem Material ausgeführt ist, welches gewählt ist aus der Gruppe, die besteht aus Gummi, Carbon, POM, PA, TPE, insbesondere TPE-S, TPE-O, TPE-U, TPE-A TPE-V und TPE-E, und jedweder Kombination davon.

## Claims

1. Window wiping apparatus, suitable for wiping a window (4) of a vehicle, in particular of a motor vehicle, comprising, in accordance with the fin ray principle, a wiper arm (1) with a wiper blade head (70) and a wiper blade (2) which comprises:
- an elongate upper part (10) which is of at least partially flexible configuration,
- an elongate lower part (12) which is of at least partially flexible configuration, and
- a plurality of connecting elements (18) for connecting the upper part (10) and the lower part (12), the connecting elements (18) being spaced apart from one another along a longitudinal extent (8) of the wiper blade (2) and being attached on the upper part (10) and/or the lower part (12) by means of a rotary joint (20), the connecting elements (18) being designed, in particular, to make a movement possible of the upper part (10) and the lower part (12) relative to one another with a movement component along the longitudinal extent (8) of the wiper blade (2),
the lower part (12) having, on a side (57) which faces the window (4), a receiving slot (50) along the longitudinal extent (8) of the wiper blade (2), the receiving slot (50) being designed to receive a wiper rubber (51) replaceably and extending along the longitudinal extent (8) on an underside of the lower part (12) from a position of the wiper blade head (70) to a connecting position (34) of the upper part (10) and the lower part (12), which connecting position (34) lies opposite the wiper blade head (70) along the longitudinal extent (8), **characterized in that** a closure mechanism (52) is provided at the connecting position (34), which closure mechanism (52) is designed to secure the wiper rubber (51) against sliding out, the lower part (12) and/or the upper part (10) being configured in one piece with the closure mechanism (52).

2. Window wiping apparatus according to Claim 1, the closure mechanism (52) comprising a cap (54) which is designed to cover that end of the receiving slot (50) which lies at the connecting position (34).

3. Window wiping apparatus according to Claim 2, the cap (54) being attached movably on the lower part (12) and/or on the upper part (10) by means of a hinge (53).

4. Window wiping apparatus according to Claim 3, the hinge (53) being selected from the group which consists of a joint, an integral hinge, a rotary joint, a tapered portion of the material for producing lower stiffness along a torsional axis, a joint with a rotational axis, a means for connecting the upper part (10) to the cap (54) or for connecting the lower part (12) to the cap (54), which means permits folding in of the cap (54), and any combination thereof.

5. Window wiping apparatus according to one of Claims 1 to 4, the closure mechanism (52) having a latching part (55) which is designed to latch into a cutout (56) on the lower part (12).

6. Window wiping apparatus according to one of Claims 1 to 5, the receiving slot (50) being designed, together with the wiper rubber (53), in such a way that a non-positive and/or positively locking connection are/is provided in a releasable manner.

7. Window wiping apparatus according to one of Claims 1 to 6, the receiving slot (50) being configured in a material which is selected from the group which consists of rubber, carbon, POM, PA, TPE, in particular TPE-S, TPE-O, TPE-U, TPE-A, TPE-V and TPE-E, and any combination thereof.

## Revendications

1. Dispositif d'essuie-glace approprié pour essuyer une vitre (4) d'un véhicule, en particulier d'un véhicule automobile, comprenant un bras d'essuie-glace (1) avec une tête de balai d'essuie-glace (70) et un balai d'essuie-glace (2) selon le principe Finray, qui comprend :
- une partie supérieure allongée (10) qui est configurée de manière au moins partiellement flexible,
- une partie inférieure allongée (12) qui est configurée de manière au moins partiellement flexible, et
- plusieurs éléments de liaison (18) pour relier la partie supérieure (10) et la partie inférieure (12), les éléments de liaison (18) étant espacés les uns des autres le long d'une étendue longitudinale (8) du balai d'essuie-glace (2) et étant montés au niveau de la partie supérieure (10) et/ou de la partie inférieure (12) au moyen d'une articulation pivotante (20), en particulier les éléments de liaison (18) étant conçus pour permettre un mouvement de la partie supérieure (10) et de la partie inférieure (12) l'une par rapport à l'autre avec une composante de déplacement le long de l'étendue longitudinale (8) du balai d'essuie-glace (2),
la partie inférieure (12) présentant, au niveau d'un côté (57) tourné vers la vitre (4), une fente de réception (50) le long de l'étendue longitudinale (8) du balai d'essuie-glace (2), la fente de réception (50) étant conçue pour recevoir un caoutchouc d'essuie-glace (51) de manière remplaçable et la fente de réception (50) le long de l'étendue longitudinale (8) s'étendant au niveau d'un côté inférieur de la partie inférieure (12) d'une position de la tête de balai d'essuie-glace (70) à une position de liaison (34), opposée à la tête de balai d'essuie-glace (70) le long de l'étendue longitudinale (8), de la partie supérieure (10) et de la partie inférieure (12), **caractérisé en ce qu'**un mécanisme de fermeture (52) est prévu au niveau de la position de liaison (34), lequel est conçu pour fixer le caoutchouc d'essuie-glace (51) pour l'empêcher de sortir par glissement, la partie inférieure (12) et/ou la partie supérieure (10) étant réalisées d'une seule pièce avec le mécanisme de fermeture (52).

2. Dispositif d'essuie-glace selon la revendication 1, dans lequel le mécanisme de fermeture (52) comprend une coiffe (54) qui est conçue pour recouvrir l'extrémité de la fente de réception (50) placée au niveau de la position de liaison (34) .

3. Dispositif d'essuie-glace selon la revendication 2, dans lequel la coiffe (54) est montée au moyen d'une charnière (53) de manière déplaçable au niveau de la partie inférieure (12) et/ou au niveau de la partie supérieure (10).

4. Dispositif d'essuie-glace selon la revendication 3, dans lequel la charnière (53) est choisie dans le groupe constitué d'une articulation, d'une charnière à film, d'une articulation pivotante, d'un rétrécissement du matériau pour générer une plus faible rigidité le long d'un axe de torsion, d'une articulation avec un axe de rotation, d'un moyen pour relier la partie supérieure (10) à la coiffe (54) ou pour relier la partie inférieure (12) à la coiffe (54), lequel permet un rabattement de la coiffe (54), et de toute combinaison de ceux-ci.

5. Dispositif d'essuie-glace selon l'une quelconque des revendications 1 à 4, dans lequel le mécanisme de fermeture (52) présente une partie d'encliquetage (55) qui est conçue pour s'encliqueter dans un évidement (56) au niveau de la partie inférieure (12).

6. Dispositif d'essuie-glace selon l'une quelconque des revendications 1 à 5, dans lequel la fente de réception (50), conjointement avec le caoutchouc d'essuie-glace (53), est conçue de telle sorte qu'un engagement par force et/ou par correspondance de formes soit fourni de manière amovible.

7. Dispositif d'essuie-glace selon l'une quelconque des revendications 1 à 6, dans lequel la fente de réception (50) est réalisée en un matériau choisi dans le groupe constitué de caoutchouc, de carbone, de POM, de PA, de TPE, en particulier de TPE-S, de TPE-O, de TPE-U, de TPE-A, de TPE-V et de TPE-E, et de toute combinaison de ceux-ci.
